# EUROPÄISCHE PATENTSCHRIFT

(11) **EP 0 663 047 B1**
(45) Veröffentlichungstag und Bekanntmachung des Hinweises auf die Patenterteilung: **26.03.1997**
(21) Anmeldenummer: 93920781.7
(22) Anmeldetag: 20.09.1993
(51) Int. Cl.: F16B 7/14

(54) **ROHRSYSTEM FÜR ROHRKONSTRUKTIONEN**
TUBE SYSTEM FOR TUBULAR CONSTRUCTIONS
SYSTEME TUBULAIRE POUR CONSTRUCTIONS TUBULAIRES

(30) Priorität: 18.09.1992 DE 4231333
(43) Veröffentlichungstag der Anmeldung: 19.07.1995
(73) Patentinhaber: Kühl, Hans, D-73207 Plochingen (DE)
(72) Erfinder: Kühl, Hans, D-73207 Plochingen (DE)
(74) Vertreter: Müller-Boré & Partner Patentanwälte
(86) Internationale Anmeldenummer: EP9302548
(87) Internationale Veröffentlichungsnummer: WO9407038

(56) Entgegenhaltungen:
- WO-A-81/01448
- WO-A-92/16763
- DE-A- 2 642 235
- DE-B- 1 201 619
- GB-A- 497 314
- US-A- 4 585 367

## Beschreibung

Die vorliegende Erfindung betrifft ein Rohrsystem für Rohrkonstruktionen nach dem Oberbegriff des Anspruchs 1. Rohrkonstruktionen nach der vorgeschlagenen Erfindung können mit Vorteil insbesondere bei Gerüsten im Bauwesen und für Tribünen, Leitern, Geländer usw. eingesetzt werden.

Bekannte Rohrsysteme haben zylindrische Rohre, an denen Knotenelemente mittels Klemmschellen festklemmbar sind. Die Klemmschellen erfordern Gewinde und Schrauben oder Gewindebolzen und Muttern, die leicht verloren gehen, wobei vor allen Dingen im Gerüstbau durch Verschmutzung die einzelnen Teile schwergängig oder gar unbrauchbar werden.

Aus der GB-A-497,314 ist ein Teleskopstativ mit drei Beinen bekannt. Zum Feststellen der Teleskop-Standbeine sind an den Innenflächen der im Durchmesser größeren Rohre sich in Umfangsrichtung erstreckende Keilprofile vorgesehen. An den Außenflächen der im Durchmesser kleineren Rohre sind Erhebungen vorgesehen, die bei einer Relativverschiebung der ineinandergesteckten Rohre eine Klemmung durch Auflaufen auf den Keilprofilen erzeugen. Die durch die Festklemmung zu erreichenden Axialkräfte sind jedoch für einen Einsatz bei einem Rohrsystem für Rohrkonstruktionen zu gering.

Es ist die Aufgabe der vorliegenden Erfindung, ein Rohrsystem für Rohrkonstruktionen vorzuschlagen, welches einfach und kostengünstig herstellbar ist, eine einfache Handhabung aufweist und daneben große Kräfte in axialer sowie radialer Richtung aufnehmen kann.

Die Aufgabe wird durch die im Anspruch 1 angegebenen Merkmale gelöst.

Bei dem vorgeschlagenen Rohrsystem bedarf es somit keiner Gewinde, Schrauben oder Gewindebolzen, wobei die einzelnen Verbindungsstellen jederzeit wieder lösbar sind, wenn das angreifende Drehmoment den Reibschluß/ Formschluß im Verbindungsbereich überwindet. Die in axialer Richtung sowie beidseits in radialer Richtung übertragbaren Kräfte sind neben dem Material und der Oberflächenbeschaffenheit der Keilflächen insbesondere von dem Betrag der Relativverdrehung zwischen den Rohren bzw. den Rohren und den Knotenelementen - nach erfolgter Berührung der zusammenwirkenden Keilflächen - abhängig. Zum Verbinden der Rohre bzw. der Rohre und der Knotenelemente werden deren freie Enden ineinander gesetzt, so daß die zusammenwirkenden Keilprofile einander gegenüberliegen und sich berühren. Sollte gemäß einer bevorzugten Ausführungsform nach dem entsprechenden Eingriff ein Spalt zwischen gegenüberliegenden Keilprofilen vorhanden sein, bedarf es zunächst einer ersten Relativverdrehung, um den Spalt zu schließen, so daß sich die zusammenwirkenden Keilflächen berühren. Danach bedarf es einer weiteren, abhängig von den zu übertragenden Kräften und insoweit bestimmbaren Relativverdrehung zwischen den Rohren bzw. den Rohren und den Knotenelementen, um den angestrebten selbsthemmenden Reibschluß zu erreichen. Unabhänig vom Drehsinn können dann in radialer sowie in axialer Richtung spielfrei erhebliche Kräfte übertragen werden, ohne daß sich die miteinander verbundenen Rohre bzw. Knotenelemente dabei voneinander lösen. Der Pol bzw. Koordinatenursprung der logarithmischen Spirale, die den Verlauf der Keilflächen festlegt, befindet sich dabei in der Achse der Rohre bzw. der Knotenelemente. Der Verlauf der Keilflächen in Form einer logarithmischen Spirale hat zur Folge, daß sich bei Berührung gegenüberliegender Keilflächen alle Punkte der Keilflächen gleichzeitig berühren und zu tragen beginnen. Im Querschnitt gesehen erfolgt also eine linienförmige Berührung und nicht etwa nur eine punktförmige.

Vorzugsweise sind die äußeren und/oder inneren Unfangs- bzw. Umrißflächen der Rohre bzw. die der Rohre und der Knotenelemente mit jeweils drei, in Umfangsrichtung hintereinander liegenden Keilprofilen versehen. Dies führt bei der Relativverdrehung zum selbsthemmenden Reibschluß zusätzlich zu einer Zentrierung der miteinander verbundenen Teile.

Zweckmäßigerweise sind die Keilprofile sektorartig wenigstens über axiale Bereiche der Rohre bzw. der Knotenelemente angeordnet.

Um das Eingreifen der Rohre ineinander bzw. der Rohre in die Knotenelemente zu erleichtern, kann nach deren Eingriff ein Spalt zwischen den sich gegenüberliegenden Keilprofilen vorhanden sein. Um diesen Spalt zu schließen und zu einer Anlage der sich gegenüberliegenden Keilflächen zu gelangen, bedarf es lediglich einer Relativverdrehung zwischen den verbundenen Teilen. Dabei geht zwar ein Teil der Berührungsflächen der sich gegenüberliegenden Keilflächen verloren, der dann nicht mehr zur Selbsthemmung beitragen kann, aber lediglich von geringem Betrag ist.

Die logarithmische Spirale ist zwar die mathematisch exakte Kurvenform, die die angestrebte vollflächige Berührung der gegenüberliegenden Keilflächen in sämtlichen Punkten bedingt. In der Praxis kann die Berührung über die gesamte Keilfläche auch von Kurven erreicht werden, die der logarithmischen Spirale mehr oder minder angenähert sind. Geringe Abweichungen können nämlich durch die elastische und/oder plastische Verformbarkeit des Materials der Keilflächen ausgeglichen werden. Insoweit kann der Verlauf der logarithmischen Spirale auch durch mehrere Krümmungskreise erzeugt werden, die gegenüber den Achsen der Rohre bzw. der Knotenelemente versetzte Kreismittelpunkte aufweisen. Es können also auch Kreisbögen mit Radien, Zentren und Zentriwinkeln gefunden werden, die bei nach innen geformten Keilflächen nur unmerkliche Abweichungen vom Verlauf einer logarithmischen Spirale aufweisen.

Die bevorzugte Steigung der Keilflächen zur Erlangung des angestrebten selbsthemmenden Reibschlusses liegt zwischen 1:5 und 1:500, vorzugsweise zwischen 1:20 und 1:100. Bei darüber- bzw. darunterliegenden Steigungen kann der angestrebte selbsthemmende Reibschluß nicht mehr erreicht werden, weil entweder ein zu frühes Durchrutschen der verbundenen Teile des Rohrsystems stattfindet oder die Relativverdrehung gar nicht mehr möglich ist.

Gemäß einer bevorzugten Ausführungsform erstrecken sich die Keilprofile der Rohre über deren gesamte Länge. Die Rohre können dann auch gekürzt werden, wenn sie insbesondere in Verbindung mit den Knotenelementen für Rohrkonstruktionen eingesetzt werden, die, wie beispielsweise Geländer, keine Durchmessersprünge aufweisen sollen.

Andererseits können sich die Keilprofile im Inneren der Rohre über deren ganze Länge und die Keilprofile auf der Außenseite der Rohre lediglich über diejenige Länge erstrecken, mit der sie in die Keilprofile bzw. Arme der Knotenelemente einsteckbar sind.

Ein teleskopartiges Ineinanderstecken der Rohre ist dann möglich, wenn diese unterschiedliche Durchmesser aufweisen, um sie somit in beliebigen gegenseitigen Längspositionen miteinander zu verbinden, um somit Rohrkonstruktionen beliebiger Maße auf einfache Weise herzustellen. Falls eine solche Konstruktion nicht mehr benötigt wird, kann sie leicht wieder zerlegt und die Rohre können anderweitig verwendet werden.

Miteinander verbundene Rohre können auch stumpf gestoßen werden, indem Knotenelemente in Form von in den Rohren angeordnetene Steckverbindern mit an deren Außenumfang angeordneten Keilprofilen oder in Form von Muffen mit an deren Innenumfang angeordneten Keilprofilen vorgesehen werden, in welchen die Rohrenden einsteckbar sind.

Insbesondere zur Aussteifung können im Inneren der Rohre eingesetzte Rohrstücke mit an deren Außenumfang angeordneten Keilprofilen vorgesehen sein.

In weiteren bevorzugten Ausführungsformen kann das freie Ende der Rohre mit einem, am Außenumfang Keilprofile aufweisenden Stift oder einer am Innenumfang Keilprofile aufweisenden Kappe versehen sein. Dabei kann, um eine Dichtwirkung zu erzeugen, zwischen dem freien Ende des Rohres und dem Stift bzw. der Kappe eine Dichtung angeordnet sein. Die verwendeten Knotenelemente können von der Konfiguration her insbesondere geradlinig verlaufend, T-, winkel- und/oder kreuzförmig ausgebildet sein. Bei dem geradlinig verlaufenden Knotenelement können zwischen den beiden, die Keilprofile aufweisenden Stiften bzw. Armen Eingriffsbereiche für ein Dreh- oder Gegenhaltewerkzeug angeordnet sein. Schließlich können die Rohre und die Knotenelemente auf ihren Innen- oder Außenflächen auch mit paarweise zusammenwirkenden Drehanschlägen versehen sein, die den Drehwinkel beim Herstellen des Reibschlusses begrenzen. Die Drehanschläge können vorzugsweise aus mindestens einer Feder am Rohr oder am Knotenelement und aus einer auf diese Feder abgestimmten Nut mit in Umfangsrichtung begrenzter Erstreckung am Knotenelement bzw. Rohr bestehen.

Das vorgeschlagene Rohrsystem wird anhand der nachfolgenden Figuren in beispielhafter Weise noch näher erläutert. Es zeigen:
- Fig. 1: das grundlegende Prinzip zum Verbinden der Teile des Rohrsystems zum Zeitpunkt des Ineinadersteckens;
- Fig. 2: das Prinzip gem. Fig. 1 in der Klemmstellung;
- Fig. 3: die Ansicht eines Satzes von drei Rohren, teilweise im Schnitt;
- Fig. 4: die Stirnansicht des Satzes gem. Fig. 3;
- Fig. 5 u. 6: Knotenelemente zum geraden Verbinden von Rohren, teilweise im Längsschnitt;
- Fig. 7 bis 10: Ansichten weiterer unterschiedlicher Knotenverbindungen;
- Fig. 11: die teilweise geschnitte Ansicht eines rohrförmigen Ständers;
- Fig. 12 u. 13: Drehanschläge in zwei unterschiedlichen Positionen im Querschnitt;
- Fig. 14 u. 15: eine Rohrverbindung für Fluide in Schnittdarstellung in zwei verschiedenen Ebenen und
- Fig. 16 u. 17: zwei Rohrverschlüsse im Längsschnitt.

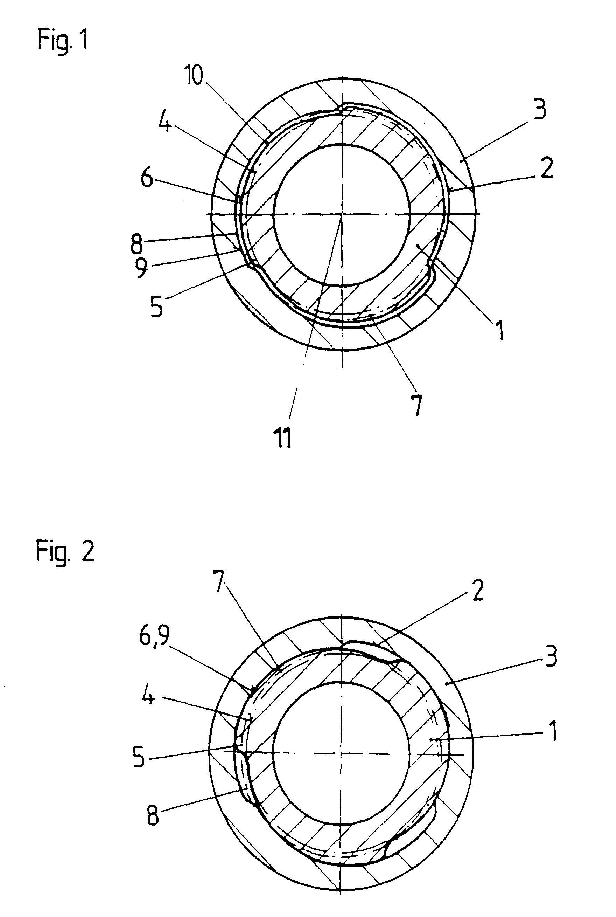

In den Fig. 1 und 2 ist das Prinzip des Zusammenwirkens der Keilprofile an den Rohren bzw. den Rohren und den Knotenelementen zum Herstellen eines selbsthemmenden Reibschlusses zwischen diesen Teilen schematisch erläutert. Dabei ist mit Stift 1 beispielsweise ein an einer Verbindungsstelle innenliegendes Rohr oder ein innenliegender Arm eines Knotenelements und entsprechend mit Aufnahme 2 ein außenliegendes Rohr oder ein außenliegender Arm eines Knotenelements bezeichnet. Der Stift 1 weist über einer gedachten Zylinderfläche 4 drei diese überragende Nocken 5 auf, deren positiv gekrümmten Rückenflächen bzw. Keilflächen 6 flach ansteigen und von ihrem höchsten Punkt steil zum tiefsten Punkt des benachbarten Nockens 5 bzw. auf die Zylinderfläche 4 abfallen. Sie bilden somit ein konvexes Keilprofil. Entsprechend weist die Aufnahme 2 über einer gedachten, einen etwas größeren Durchmesser als die Zylinderfläche 4 aufweisenden Zylinderfläche 3 Nuten 8 auf, deren negativ gekrümmte Kehlflächen bzw. Keilflächen 9, ausgehend von der Zylinderfläche 7, flach zu einem tiefsten Punkt abfallen. Sie bilden somit ein konkaves Keilprofil. Infolge des Durchmesserunterschiedes zwischen den Zylinderflächen 5 und 7, die die Bezugsflächen der Nocken 5 bzw. Nuten 8 bilden, ergibt sich zwischen dem konvexen Keilprofil des Stiftes 1 und dem konkaven Keilprofil der Aufnahme 2 ein Spalt 10. Dieser Spalt 10 ist aber nicht notwendig, sondern erleichtert lediglich das Ineinanderstecken der entsprechenden Teile. Die Breite des Spaltes 10 ist gering gehalten, jedenfalls wesentlich geringer als die Differenz zwischen dem Abstand des höchstens Punktes eines Nockens 5 oder einer Nut 8 von der Längsachse 11 des Stiftes 1 bzw. der Aufnahme 2. Dennoch kann der Stift 1 infolge dieses Spaltes 10 beim Ineinanderfügen leicht in die Aufnahme 2 geschoben werden. Der Spalt 10 bestimmt neben der Steigung der Keilflächen und der Anzahl der entsprechenden Nocken 5 bzw. Nuten 8 am Umfang des Stiftes 1 und der Aufnahme 2 auch das radiale Maß, um welches sich die Nuten 8 und die Nocken 5 in Umfangsrichtung betrachtet überdecken, was wesentlich die Möglichkeit des "Überspringens" von Nuten 8 und Nocken 5 beim Herstellen des selbsthemmenden Reibschlusses bestimmt. Wenn diese Möglichkeit des Überspringens nicht - etwa als Sicherung gegen Abdrehen des Stiftes 1 - gewollt ist, darf ein auch von der Elastizität des Materials der Keilprofile, also der Nocken 8 und der Nuten 5, abhängiges Maß der Überdeckung nicht unterschritten werden. Um den Stift 1 mit der Aufnahme 2 in selbsthemmenden Reibschluß zu bringen, werden die beiden Teile in einer zweiphasigen Einrenkbewegung durch Relativverdrehung miteinander in Wirkverbindung gebracht. Zunächst wird in einer Winkelstellung des Stiftes 1 und der Aufnahme 2 zueinander, in der die Nocken 5 des Stiftes 1 und die Nuten 8 der Aufnahme 2 miteinander fluchten, der Stift 1 axial auf die vorgesehene Länge in die Aufnahme 2 hineingesteckt (Fig. 1). Dann wird der Stift 1 in der Aufnahme 2 im Uhrzeigersinn nach rechts gedreht. Dadurch vermindert sich der Abstand zwischen den Keilflächen 6, 9 des Stiftes 1 bzw. der Aufnahme 2, bis sämtliche Keilprofile jeweils paarweise aneinander liegen, also der Spalt 10 nicht mehr vorhanden ist. Beim weiteren Relativverdrehen des Stiftes 1 im Bezug auf die Aufnahme 2 werden die Keilprofile des Stiftes 1 und der Aufnahme 2 elastisch verformt, wodurch sich in dieser Befestigungsstellung (Fig. 2) der Stift 1 in der Aufnahme 2 selbsthemmend verklemmt, um eine feste, jedoch wieder lösbare Verbindung zwischen Aufnahme 2 und Stift 1 herzustellen. Der Winkel, über den das Relativverdrehen erfolgt, hängt von der Breite des Spaltes 10 zwischen Stift 1 und Aufnahme 2, von der Elastizität des Materials der Keilprofile, von deren Steigung, von der Anzahl der Nocken 5 bzw. Nuten 8 um den Umfang von Stift 1 bzw. Aufnahme 2 und anderen Parametern ab. Die Verbindung weist einen flachen Momentenverlauf über den Drehwinkel auf, so daß das Lastmoment, wenn der selbsthemmende Reibschluß erreicht ist, bei Abweichungen vom vorgesehenen Drehwinkel nicht wesentlich vom angestrebten Wert abweicht.

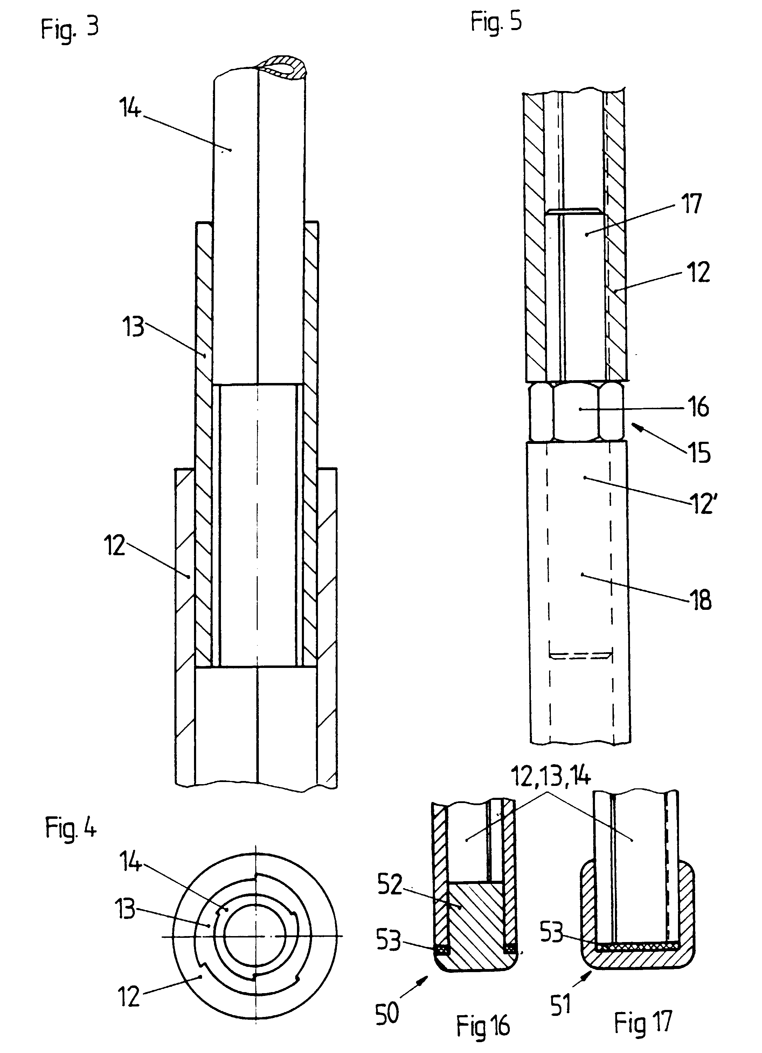

Die Fig. 3 und 4 zeigen einen Satz von drei, im Durchmesser zum teleskopartigen Ineinanderstecken aufeinander abgestimmter Rohre 12, 13 und 14. Das Rohr 12 mit dem größten Durchmesser weist einen zylindrischen Außendurchmesser auf, wobei an dessen Innendurchmesser die konvexen Keilprofile (Fig. 4) angeordnet sind. Das Rohr 13 mit dem mittleren Durchmesser ist sowohl außen als auch innen mit den Keilprofilen versehen, wobei dessen konvexe Keilprofile auf der Außenseite auf die konkaven Keilprofile des Rohres 12, welches den kleinsten Durchmesser aufweist, abgestimmt sind und die konkaven Keilprofile im Inneren des Rohres 13 auf die konvexen Keilprofile des Rohres 14 abgestimmt sind. Das Rohr 14 weist innenseitig einen zylindrischen Durchmesser auf. Die Keilprofile auf der Außen- und Innenseite der Rohre 12, 13, 14 erstrecken sich vorteilhafterweise über die ganze Länge der jeweiligen Rohre 12, 13, 14. Es ist jedoch auch möglich, die Keilprofile auf jeweils der Innen- oder Außenseite, vorzugsweise auf der Außenseite, nur in den Endbereichen der Rohre 12, 13, 14 über diejenige Länge anzuordnen, mit welcher sie in entsprechende Knotenelemente eingesteckt werden. Dadurch können die Rohre 12, 13, 14 auf dem frei liegenden Bereich ihrer Außenseite glatt, insbesondere zylindrisch ausgeführt werden, was ihre Handhabbarkeit verbessert. Die Keilprofile auf der Innenseite durchlaufend anzuordnen, hat den Vorteil, daß sie dort besser gegen Beschädigungen geschützt sind, was ein Verdrehen zum Erreichen des selbsthemmenden Reibschlusses behindern könnte. Die Rohre 12, 13, 14 können, teleskopartig ineinandergeschoben, durch gegenseitiges Verdrehen in beliebiger gegenseitiger Längsposition in den selbsthemmenden Reibschluß gebracht und somit untereinander befestigt werden. So kann beispielsweise mit zwei, je 4 m langen Rohren 12, 13 stufenlos jede beliebige Länge von 4 m bis - unter Abzug der notwendigen Überdeckung - nahezu 8 m gebildet werden. Die Rohre 12, 13, 14 können unter gleichzeitigem Ausbilden der Keilprofile im Strang aus Metall gezogen oder in Kunststoff gespritzt werden, wobei die erforderlichen Toleranzen der Keilprofile ohne weiteres eingehalten werden können, so daß die Rohre 12, 13, 14 in einem rasch ablaufenden Arbeitsgang fertig herstellbar sind.

Um zwei Rohre 12, 12' gleichen Durchmessers miteinander zu verbinden, kann ein in Fig. 5 gezeigtes Knotenelement in Form eines Steckverbinders 15 verwendet werden. Der Steckverbinder 15 weist beidseitig eines mittig angebrachten Eingriffsbereiches 16 für ein Dreh- oder Gegenhaltewerkzeug, beispielsweise einen Maulschlüssel, Stifte 17, 18 mit konvexem Keilprofil auf. Zum Verbinden der beiden Rohre 12, 12' werden deren Enden auf die Stifte 17, 18 aufgesteckt und unter Gegenhalten des Steckverbinders 15 bis zum selbsthemmenden Reibschluß ihrer Teilprofile verdreht. Der Steckverbinder 15 kann abweichend von der gezeigten Darstellung auch als Rohrstück ausgebildet sein.

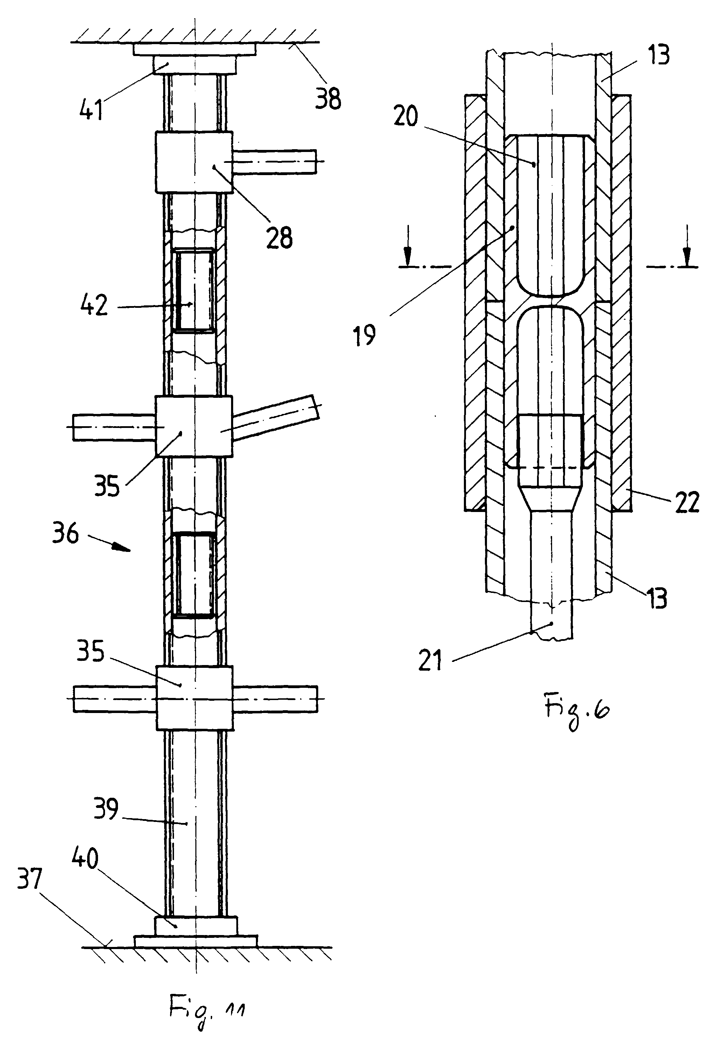

Wenn die Rohre 13, 13 stumpf aufeinanderstoßen sollen, kann ein innerer Steckverbinder 19 gem. Fig. 6 eingesetzt werden. Da dieser Steckverbinder 19 von außen nicht zugänglich ist, ist vorgesehen, ihn beim Verdrehen der Rohre 13, 13 zum Herstellen des selbsthemmenden Reibschlusses an einem Innensechskant 20 gegenzuhalten, in den ein durch das eine Rohr 13 geführter, entsprechend langer Imbusschlüssel eingreift.

Fig. 6 zeigt eine weitere Möglichkeit, zwei Rohre 13, 13 stumpf aufeinanderstoßend miteinander zu verbinden. Die beiden, außen konvexe Keilprofile aufweisenden Rohre 13, 13 werden in eine innen konkave Keilprofile aufweisende Muffe 22 gesteckt und beide mit ihr durch gegenseitiges Verdrehen in selbsthemmenden Reibschluß und damit in feste Verbindung gebracht. Die Muffe 22 kann zum Festhalten beim Verdrehen auf ihrer Außenseite mit einer nicht dargestellten Angriffsfläche für ein Drehwerkzeug versehen sein.

Eine besonders feste Verbindung zweier Rohre 13, 13 kann dadurch erzielt werden, daß die in Fig. 5 oder Fig. 6 gezeigte Rohrverbindung mittels des im Inneren der Rohre 13, 13 liegenden Steckverbinders 15 o. 19 mit der in Fig. 6 gezeigten, außen liegenden Muffe 22 kombiniert wird. Dazu weist der Eingriffsbereich 16 des Steckverbinders 15 aus Fig. 5 vorteilhafterweise einen geringeren Außendurchmesser auf als die lichte Weite der Muffe 22.

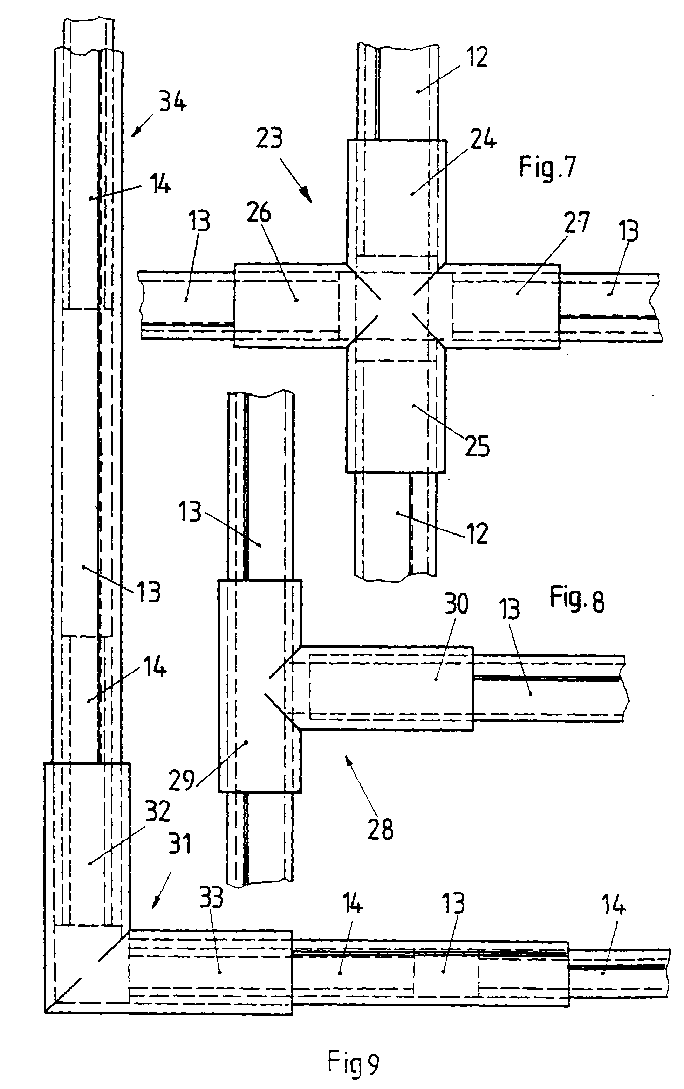

Fig. 7 zeigt ein kreuzförmiges Knotenelement 13, welches an seinen Armen 24, 25, 26, 27 konkave Keilprofile aufweist. Die in Fig. 7 nach oben und unten weisenden Arme 24, 25 sind auf Rohre 12 eines größeren Durchmessers abgestellt, die in Fig. 7 seitlich sich erstreckenden Arme 26, 27 auf Rohre 13 eines mittleren Durchmessers. Es versteht sich, daß auch Arme für gleiche Durchmesser oder beliebige andere Durchmesserkombinationen ausgebildet werden können.

In Fig. 8 ist ein T-förmiges Knotenelement 28 dargestellt, dessen senkrechter Arm 29 innen durchgehende Keilprofile aufweist, so daß das Knotenelement 28 an beliebiger Stelle eines außen konvexe Keilprofile aufweisenden Rohres 13 befestigbar ist. Auch der einzelne waagrechte Arm 30 besitzt innen konkave Keilprofile mit einem dem senkrechten Arm 29 entsprechenden Rohrdurchmesser.

Ein winkelförmiges Knotenelement 31 mit konvexen Keilprofilen in beiden Armen 32, 33 ist in Fig. 9 gezeigt. Die in das Knotenelement 31 eingesteckten Rohre 13 sind an ihren eingesteckten Enden durch in ihrem Inneren angeordnete Rohrstücke 14 eines kleineren Durchmessers, welche außen angeordnete konvexe Keilprofile aufweisen, verstärkt, um die Knickfestigkeit der Rohre 13 in diesem besonders auf Knickung beanspruchten Bereich zu erhöhen. Eine Erhöhung der Knickfestigkeit kann auch an beliebiger Stelle entlang des Rohres 14 erfolgen, wie dies in Fig. 9 durch das an der Stelle 34 eingefügte Rohr 14 angedeutet ist. Ein solches einzusetzendes Rohrstück 14 kann mittels eines entsprechend langen Werkzeuges, beispielsweise eines Imbusschlüssels, welches in eine entsprechende Angriffsfläche des Rohrstückes 14 eingreift, in das äußere Rohr 13 eingeführt und an der vorgesehenen Stelle mit dem äußeren Rohr 13 breit verbunden werden.

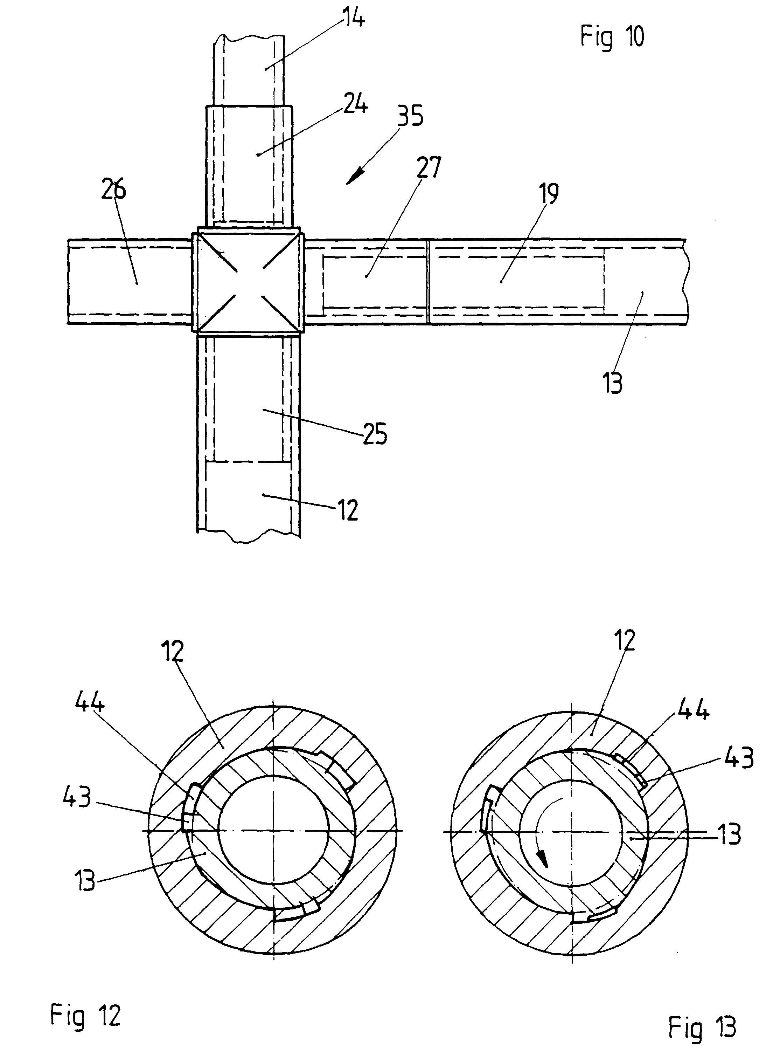

Die auf einen mittleren Rohrdurchmesser abgestellten Arme 24, 25, 26, 27 des besonders vielseitig einsetzbaren kreuzförmigen Knotenelementes 35 aus Fig. 10 weisen sowohl auf deren Außenseite konvexe als auch auf deren Innenseite konkave Keilprofile auf. Der sich in der Figur nach links erstreckende Arm ist freigelassen, um seine Keilprofile sichtbar zu machen. Auf den sich nach unten erstreckenden Arm 25 ist ein Rohr 12 eines größeren Durchmessers außen aufgesteckt und mittels seiner innen angeordneten konkaven Keilprofile mit den äußeren konvexen Keilprofilen dieses Armes 25 reibschlüssig verbunden. Umgekehrt ist auf den sich nach oben erstreckenden Armen 24 ein Rohr 14 eines kleineren Durchmessers eingesteckt und mit seinen außen angeordneten konvexen Keilprofilen mit den inneren konkaven Keilprofilen dieses Armes 24 reibschlüssig verbunden. Am sich nach rechts erstreckenden Arm 27 ist ein Rohr 13 mit einem den Durchmesser des Armes 27 mittleren Durchmessers angeordnet. Als Zwischenglied dient hierzu ein Steckverbinder 19, wie er bereits in Fig. 6 beschrieben wurde.

Fig. 11 zeigt einen Anwendungsfall eines Satzes von Rohr- und Knotenelementen für einen rohrförmigen Ständer 36 zwischen einer Bodenfläche 37 und einer Decke 38. Das durchgehende Rohr 39 steht in einem Fußteller 40, in welchen konvexe Keilprofile eingearbeitet sind und in welchem das Rohr 39 mit seinen konkaven außen angeordneten Keilprofilen befestigt ist. Ein Stützteller 41 am oberen Ende des Rohres 39 ist entsprechend ausgeführt. Auf dem Rohr 39 sind zwei kreuzförmige und ein T-förmiges Knotenelement 25 bzw. 28 reibschlüssig über die entsprechenden Keilprofile befestigt. Im mittleren Bereich des Rohres 39 ist ein weiteres Rohrstück 42 zur Erhöhung der Knickfestigkeit eingesetzt. Die Knotenelemente 23, 28, 35, die auch beliebige andere Formen, andere Achsenwinkel, andere Armlängen usw. aufweisen können, sind vorzugsweise aus zusammengeschweißten Abschnitten von Rohren des entsprechenden Satzes von Rohren oder als Druckgußteile hergestellt, bei welchen die Keilprofile gleich mitgeformt sind.

Es erscheint häufig zweckmäßig, den Winkelbetrag, um den die Teile zum Erzeugen des selbsthemmenden Reibschlusses gegeneinander verdreht werden, zu begrenzen. In den Fig. 12 und 13 ist eine vorteilhafte Möglichkeit für dieses Begrenzen des Drehwinkels am Beispiel zweier Rohre 12, 13 in Art einer Nut- Feder- Verbindung gezeigt. Das konvexe Keilprofil des Rohres 13 ist mit mindestens einer, im dargestellten Ausführugnsbeispiel mit drei achsparallelen Federn 43 versehen, die in entsprechende Nuten 44 des konkaven Keilprofils des Rohres 12 eingreifen. Dabei ist die Breite der Nuten 44 so gewählt, daß die Federn 43 sich in den Nuten um eine dem maximal zulässigen Drehwinkel entsprechende Distanz in Umfangsrichtung bewegen können. Die gegenseitige Lage der Federn 43 und Nuten 44 ist so, daß der Bewegungsweg ausgehend von der Position des Ineinandersteckens der zu verbindenden Teile zur Verfügung steht. Fig. 12 zeigt dabei die Position nach dem Ineinanderfügen der Rohre 12, 13. Die Federn 43 liegen an einer Flanke der Nuten 44 an. Fig. 13 zeigt die Lage nach dem Relativverdrehen entgegen der Pfeilrichtung. Die Federn 43 liegen nunmehr an den anderen Flanken der Nuten 44 an und verhindern ein weiteres Verdrehen der Rohre 12, 13 gegeneinander. Die Federn 43 können in kinematischer Umkehr auch am Innenumfang und die Nuten 44 am Außenumfang angeordnet sein.

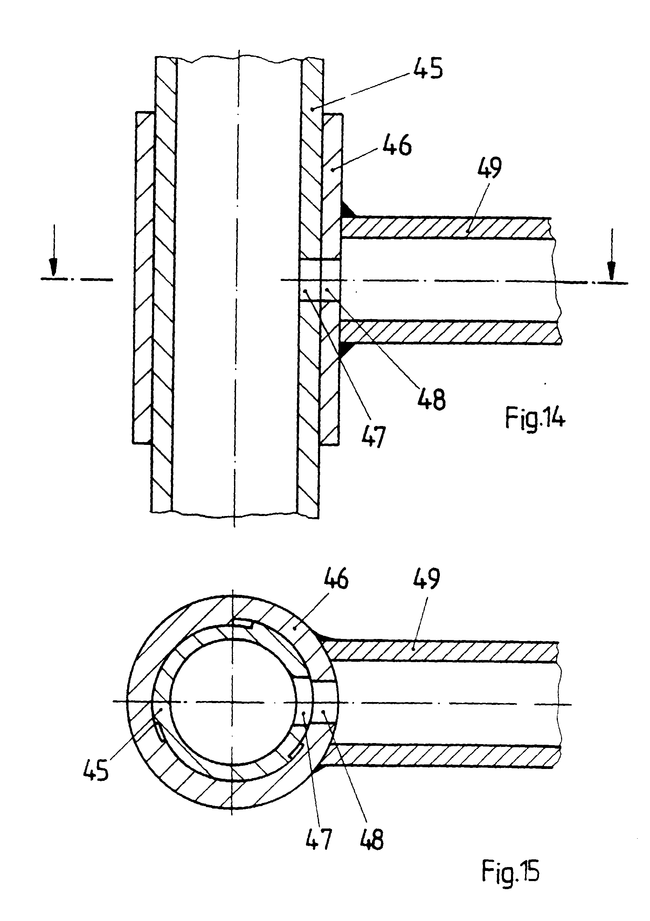

Das erfindungsgemäße Rohrsystem zum Verbinden u.a. von Rohren ist auch für Rohre zum Leiten von Fluiden, wie Gasen oder Flüssigkeiten geeignet. Wie aus Fig. 14 und 15 ersichtlich, kann auf ein außen mit konvexen Keilprofilen versehenes Leitungsrohr 45 ein T-förmiges Abzweigungsstück 46 aufgeschoben und an der Stelle, an der das Leitungsrohr 45 eine Ausstrittsöffnung 47 aufweist, durch Relativverdrehung zum angestrebten selbsthemmenden Reibschluß gebracht werden. Die Fig. 14 und 15 zeigen die End- bzw. Befestigungsstellung, in der die Austrittsöffnung 47 des Leitungsrohres 45 mit einer entsprechenden Durchtrittsöffnung 48 im Abzweigstück 46 kommuniziert. Durch die flächige Anlage der Rückenflächen der Nocken auf dem Leitungsrohr 45 an den Kehlflächen der Nuten im Abzweigstück 46 erfolgt eine zuverlässige Abdichtung zwischen Leitungsrohr 45 und dem weiterführenden Zweigrohr 48 des Abzweigstückes 46.

Das Ende eines Rohres 12, 13, 14 kann, wie in Fig. 16 und 17 dargestellt, mittels eines Stopfens 50 oder einer Kappe 51 verschlossen werden. Der Stopfen 50 weist dazu an einem Zapfen 52 konvexe Keilprofile auf, mit welchen er mit den inneren konkaven Keilprofilen eines Rohres 12, 13, 14 reibverbunden werden kann. Umgekehrt weist die topfförmige Kappe 51 an ihrer Innenseite konkave Keilprofile auf, mit welchen sie mit den äußeren konvexen Keilprofilen eines Rohres 12, 13, 14 unter Erzeugung eines selbsthemmenden Reibschlusses verbunden werden können. Stopfen 50 und Kappe 51 können mit einer Dichtung 53 versehen sein, die sich auf die Stirnfläche des Rohres 12, 13, 14 auflegt und durch die das Rohr 12, 13, 14 fluiddicht abgeschlossen werden kann.

### Bezugszeichenliste

1 Stift
2 Aufnahme
3
4 Zylinderfläche
5 Nocken
6 Keilfläche
7 Zylinderfläche
8 Nut
9 Keilfläche
10 Spalt
11 Achse
12 Rohr
12' Rohr
13 Rohr
14 Rohr
15 Steckverbinder
16 Eingriffsbereich
17 Stift
18 Stift
19 Steckverbinder
20 Innensechskant
21 Imbusschlüssel
22 Muffe
23 Kreuzförmiges Knotenelement
24 Arm
25 Arm
26 Arm
27 Arm
28 T-förmiges Knotenelement
29 Arm
30 Arm
31 Winkelförmiges Knotenelement
32 Arm
33 Arm
34 Stelle
35 Kreuzförmiges Knotenelement
36 Ständer
37 Bodenfläche
38 Decke
39 Rohr
40 Fußteller
41 Stützteller
42 Rohrstück
43 Feder
44 Nut
45 Leitungsrohr
46 Abzweigstück
47 Austrittsöffnung
48 Zweigrohr
49 Durchtrittsöffnung
50 Stopfen
51 Kappe
52 Zapfen
53 Dichtung

## Patentansprüche

1. Rohrsystem für Rohrkonstruktionen, bestehend aus miteinander verbindbaren Rohren (12, 12', 13, 14; 39) und auf oder in die Rohre (12, 12', 13, 14; 39) einsteckbaren Knotenelementen (15; 19; 23; 28; 31; 35) zum Verbinden der Rohre (12, 12', 13, 14; 39), bei welchem die Rohre (12, 12', 13, 14, 39) und die Knotenelemente (15; 19; 23; 28; 31; 35) auf den Innen- und/oder Außenflächen der freien Rohrenden bzw. der freien Enden der Arme der Knotenelemente (15; 19; 23; 28; 31; 35) wenigstens ein, sich in Umfangsrichtung erstreckendes Keilprofil aufweisen, einerseits in Form eines, eine gedachte Zylinderfläche (4) radial übersteigenden Nockens (5) und andererseits in Form einer, den Nocken (5) entsprechenden Anzahl von, eine gedachte Zylinderfläche (7) radial vertiefenden Nuten (8), dadurch gekennzeichnet, daß die Keilflächen (6, 9) der Keilprofile im wesentlichen dem Verlauf einer logarithmischen Spirale bezüglich der Achse (11) der Rohre (12, 12', 13, 14; 39) bzw. der Knotenelemente (15; 19; 23; 28; 31; 35) folgen, wobei die Steigung zusammenwirkender Keilflächen (6, 9) einen gleichen Betrag aufweist und so flach ausgebildet ist, daß aufgrund einer bestimmbaren Relativbewegung zwischen den Rohren (12, 12', 13, 14; 39) bwz. den Rohren (12, 12', 13, 14; 39) und den Knotenelementen (15; 19; 23; 28; 31; 35) nach erfolgter Berührung der zusammenwirkenden Keilflächen (6, 9) durch Aufbau eines Fugendrucks, somit spielfrei, ein selbsthemmender Reibschluß, unabhängig vom Drehsinn und der Belastungsrichtung, in radialer sowie axialer Richtung sowie zwischen den Rohren (12, 12', 13, 14; 39) bzw. den Rohren (12, 12', 13, 14; 39) und den Knotenelementen (15; 19; 23; 28; 31; 35) gegeben ist.

2. Rohrsystem nach Anspruch 1, bei welchem die äußeren und/oder inneren Umfangs- bzw. Umrißflächen der Rohre (12, 12', 13, 14; 39) bzw. die der Rohre (12, 12', 13, 14; 39) und der Knotenelemente (15; 19; 23; 28; 31; 35) jeweils drei, in Umfangsrichtung hintereinanderliegende Keilprofile aufweisen.

3. Rohrsystem nach Anspruch 1, bei welchem die Keilprofile sektorartig wenigstens über axiale Bereiche der Rohre (12, 12', 13, 14; 39) bzw. der Knotenelemente (15; 19; 23; 28; 31; 35) angeordnet sind.

4. Rohrsystem nach Anspruch 1, bei welchem nach Eingriff der Rohre (12, 12', 13, 14; 39) bzw. der Rohre (12, 12', 13, 14; 39) und der Knotenelemente (15; 19; 23; 28; 31; 35) ein Spalt (10) zwischen den sich gegenüberliegenden Keilprofilen vorhanden ist.

5. Rohrsystem nach Anspruch 1 oder 2, bei welchem der Verlauf der logarithmischen Spirale durch mehrere Krümmungskreise erzeugt wird, die gegenüber der Achse (11) der Rohre (12, 12', 13, 14; 39) bzw. der Knotenelemente (15; 19; 23; 28; 31; 35) versetzte Kreismittelpunkte aufweisen.

6. Rohrsystem nach einem der Ansprüche 1 bis 3, bei welchem die Steigung der Keilflächen (6, 9) zwischen 1:5 und 1:500, vorzugsweise zwischen 1:20 und 1:100, liegt.

7. Rohrsystem nach Anspruch 1, bei welchem sich die Keilprofile der Rohre (12, 12', 13, 14; 39) über deren gesamte Länge erstrecken.

8. Rohrsystem nach Anspruch 1, bei welchem sich die Keilprofile im Inneren der Rohre (39) über deren ganze Länge und die Keilprofile auf der Außenseite der Rohre (39) über diejenige Länge erstrecken, mit der sie in die Keilprofile der Knotenelemente (35) einsteckbar sind.

9. Rohrsystem nach Anspruch 1, bei welchem die Rohre (12, 12', 13, 14; 39) unterschiedliche Durchmesser aufweisen und teleskopartig ineinandersteckbar ausgebildet sind.

10. Rohrsystem nach Anspruch 1, bei welchem zum stumpfen Stoß der Rohre (13) Knotenelemente (19) in Form von in den Rohren (13) angeordneten Steckverbindern (19) mit an deren Außenumfang angeordneten Keilprofilen oder in Form von Muffen (22) mit an deren Innenumfang angeordneten Keilprofilen, in welche die Rohrenden einsteckbar sind, angeordnet sind.

11. Rohrsystem nach Anspruch 1, bei welchem im Inneren der Rohre (39) eingesetzte Rohrstücke (42) mit an deren Außenumfang angeordneten Keilprofilen vorgesehen sind.

## Claims

1. A pipe system for pipe structures, consisting of pipes that can be joined to one another (12, 12', 13, 14; 39) and coupling members (15; 19; 23; 28; 31' 35) which can be assembled on or inserted in the pipes in order to join the pipes (12, 12', 13, 14; 39), wherein the pipes (12, 12', 13, 14. 39) and the coupling members (15; 19; 23; 28; 31; 35) have at least one spline extending in the circumferential direction on the internal and/or external surfaces of the free pipe ends or the free ends of the arms of the coupling members (15; 19; 23; 28; 31; 35), on the one hand in the form of a cam (5) extending radially above an imaginary cylindrical surface (4) and on the other a number of grooves (8) corresponding to the number of cams (5) recessed radially back from an imaginary cylindrical surface (7), characterised in that the keying surfaces (6, 9) of the splines essentially conform to the path of a logarithmic spiral relative to the axis (11) of the pipes (12, 12', 13, 14; 39) or the coupling members (15; 19; 23; 28; 31; 35), whereby the incline of the co-operating keying surfaces (6, 9) is equal in extent and of a flat design so that by defining a relative movement between the pipes (12, 12', 13, 14; 39) or the pipes (12, 12', 13, 14; 39) and the coupling elements (15; 19; 23; 28; 31; 35) and by exerting an increasing jointing force once the co-operating keying surfaces (6, 9) have made contact, a no-play, self-locking friction coupling is produced, irrespective of the direction of rotation and the direction of load, both in the radial and the axial direction, between the pipes (12, 12', 13, 14; 39) or the pipes (12, 12', 13, 14; 39) and the coupling members (15; 19; 23; 28; 31; 35).

2. A pipe system as claimed in claim 1, wherein the external and/or internal circumferential or contour surfaces of the pipes (12, 12', 13, 14; 39) or those of the pipes (12, 12', 13, 14; 39) and the coupling members (15; 19; 23; 28;; 31; 35) each have three splines extending in the circumferential direction one behind the other.

3. A pipe system as claimed in claim 1, wherein the splines are arranged in sectors at least across axial areas of the pipes (12, 12', 13, 14; 39) or the coupling members (15; 19; 23; 28; 31; 35).

4. A pipe system as claimed in claim 1, wherein, once the pipes (12, 12', 13, 14,; 39) or the pipes (12, 12', 13, 14; 39) and the coupling members (15; 19; 23; 28; 31; 35) have been located with one another, a slit (10) is formed between the oppositely-lying splines.

5. A pipe system as claimed in claim 1 or 2, wherein the path of the logarithmic spiral is produced through several circles of curvature, the circle centres of which are offset relative to the axis (11) of the pipes (12, 12', 13, 14; 39) or the coupling members (15; 19; 23; 28; 31; 35).

6. A pipe system as claimed in one of claims 1 to 3, wherein the incline of the keying surfaces (6, 9) is between 1:5 and 1:500 and preferably between 1:20 and 1:100.

7. A pipe system as claimed in claim 1, wherein the splines of the pipes (12, 12', 13, 14; 39) extend across the entire length thereof.

8. A pipe system as claimed in claim 1, wherein the splines in the interior of the pipes (39) extend across the entire length thereof and the splines on the external face of the pipes (39) extend along that portion of length by which they can be inserted into the splines of the coupling members (35).

9. A pipe system as claimed in claim 1, wherein the pipes (12, 12', 13, 14; 39) have differing diameters and are designed so that they can be telescopically inserted inside one another.

10. A pipe system as claimed in claim 1, wherein, in order to assemble the pipes (13) flush with one another, coupling members (19) in the form of socket connectors (19) with splines on the external circumference thereof or collars (22) with splines arranged on the internal circumference thereof are arranged on the pipes (13), the pipe ends being inserted therein.

11. A pipe system as claimed in claim 1, wherein pipe members (42) having splines on the external circumference thereof are provided and are inserted in the interior of the pipes (39).

## Revendications

1. Système tubulaire pour constructions tubulaires, composé de tubes (12, 12', 13, 14 ; 39) pouvant être assemblés les uns aux autres et d'éléments de noeuds (15 ; 19 ; 23 ; 28 ; 31 ; 35) pouvant être emmanchés sur ou dans les tubes (12, 12', 13, 14 ; 39) et servant à assembler les tubes (12, 12', 13, 14 ; 39), dans lequel les tubes (12, 12', 13, 14 ; 39) et les éléments de noeuds (15 ; 19 ; 23 ; 28 ; 31 ; 35) présentent, sur les surfaces intérieures et/ou extérieures des extrémités libres des tubes ou, respectivement, des extrémités libres des branches des éléments de noeuds (15 ; 19 ; 23 ; 28 ; 31 ; 35), au moins un profil de coin s'étendant dans la direction circonférentielle qui a, pour les uns, la forme d'une came (5) qui fait saillie radialement sur une surface cylindrique imaginaire et, pour les autres, la forme d'un nombre correspondant à celui des cames (5) de rainures (8) qui approfondissent radialement une surface cylindrique imaginaire (7), caractérisé en ce que les surfaces de coin (6, 9) des profils de coin suivent sensiblement l'allure d'une spirale logarithmique par rapport à l'axe (11) des tubes (12, 12', 13, 14 ; 39) ou, respectivement, des éléments de noeuds (15 ; 19 ; 23 ; 28 ; 31 ; 35), la pente des surfaces de coin coopérantes (6, 9) présentant la même valeur et étant suffisamment plate pour que, sous l'effet d'un déplacement relatif pouvant être déterminé entre les tubes (12, 12', 13, 14 ; 39) ou entre les tubes (12, 12', 13, 14 ; 39) et les éléments de noeuds (15 ; 19 ; 23 ; 28 ; 31 ; 35), après la mise en contact des surfaces de coin (6, 9) qui coopèrent entre elles, on obtienne par la production d'une pression de joint, et par conséquent sans jeu, une liaison par friction autobloquante, indépendante du sens de rotation et du sens de la contrainte, dans une direction radiale aussi bien qu'axiale, ainsi qu'entre les tubes (12, 12', 13, 14 ; 39) ou, respectivement entre les tubes (12, 12', 13, 14 ; 39) et les éléments de noeuds (15 ; 19 ; 23 ; 28 ; 31 ; 35).

2. Système tubulaire selon la revendication 1, dans lequel les surfaces circonférentielles ou de contour extérieures et/ou intérieures des tubes (12, 12', 13, 14 ; 39) ou, respectivement, des tubes (12, 12', 13, 14 ; 39) et des éléments de noeuds (15 ; 19 ; 23 ; 28 ; 31 ; 35) présentent chacune trois profils de coin qui se succèdent dans la direction circonférentielle.

3. Système tubulaire selon la revendication 1, dans lequel les profils de coin sont disposés à la façon de secteurs au moins sur des régions axiales des tubes (12, 12', 13, 14 ; 39) ou des éléments de noeuds (15 ; 19 ; 23 ; 28 ; 31 ; 35).

4. Système tubulaire selon la revendication 1, dans lequel, après la mise en prise des tubes (12, 12', 13, 14 ; 39) ou des tubes (12, 12', 13, 14 ; 39) et des éléments de noeuds (15 ; 19 ; 23 ; 28 ; 31 ; 35), il subsiste une fente (10) entre les profils de coin mutuellement opposés.

5. Système tubulaire selon la revendication 1 ou 2, dans lequel l'allure de la spirale logarithmique est produite par plusieurs cercles de courbure qui presentent des centres déportés par rapport à l'axe (11) des tubes (12, 12', 13, 14 ; 39) ou des éléments de noeuds (15 ; 19 ; 23 ; 28 ; 31 ; 35) respectivement.

6. Système tubulaire selon une des revendications 1 à 3 dans lequel la pente des surfaces de coin (6, 9) est d'entre 1:5 et 1:500, de préférence d'entre 1:20 et 1:100.

7. Système tubulaire selon la revendication 1, dans lequel les profils de coin des tubes (12, 12', 13, 14 ; 39) s'étendent sur toute la longueur de ces tubes.

8. Système tubulaire selon la revendication 1, dans lequel les profils de coin situés à l'intérieur des tubes (39) s'étendent sur toute la longueur de ces tubes et les profils de coin situés sur le côté extérieur des tubes (39) s'étendent sur la longueur selon laquelle ils peuvent être encastrés dans les profils de coin des éléments de noeuds (35).

9. Système tubulaire selon la revendication 1, dans lequel les tubes (12, 12', 13, 14 ; 39) présentent différents diamètres et sont réalisés de façon à pouvoir s'emmancher télescopiquement les uns dans les autres.

10. Système tubulaire selon la revendication 1, dans lequel, pour mettre les tubes (13) en butée bout à bout, on prévoit des éléments de noeuds (19) réalisés sous la forme de raccords à emmanchement (19) disposés dans les tubes (13), et qui présentent des profils de coin disposés sur leur périphérie extérieure, ou encore sous la forme de manchons (22) présentant des profils de coin disposés sur leur périphérie intérieure et dans lesquels les extrémités des tubes peuvent être emmanchées.

11. Système tubulaire selon la revendication 1, dans lequel il est prévu des tronçons de tubes (42) emmanchés dans le volume intérieur des tubes (39) et munis de profils de coin disposés sur leur périphérie extérieure.
